# NOUVEAU FASCICULE DE BREVET EUROPEEN

(11) **EP 0 297 969 B2**
(45) Date de publication et mention de la décision concernant l'opposition: **20.12.1995**
(45) Mention de la délivrance du brevet: 25.09.1991
(21) Numéro de dépôt: 88401638.7
(22) Date de dépôt: 27.06.1988
(51) Int. Cl.: A01B 3/46, A01B 15/14

(54) **Perfectionnement aux charrues multi-socs, réversibles, semi-portées**
Vielscharaufsatteldrehpflüge
Multiple bottom semi-mounted two way ploughs

(30) Priorité: 29.06.1987 FR 8709124
(43) Date de publication de la demande: 04.01.1989
(73) Titulaire: S.A.R.L. ETS. GREGOIRE-BESSON et Cie, F-49230 Montigne-sur-Moine (FR)
(72) Inventeur: Besson, Alphonse, F-49230 Montigne Sur Moine (FR)
(74) Mandataire: Dawidowicz, Armand

(56) Documents cités:
- DE-A- 3 325 603
- DE-U- 7 202 127
- FR-A- 1 595 642
- FR-A- 2 090 170
- FR-A- 2 201 022
- FR-A- 2 310 686
- US-A- 3 965 989

## Description

La présente invention concerne les charrues multi-socs, réversibles, semi-portées comportant un grand nombre de socs, notamment supérieur a six et pouvant atteindre dix ou plus. Dans ces charrues, les corps de labour constitués par deux socs à versoirs symétriques sont fixés sur une poutre oblique appelée perche comportant une partie centrale orientée sensiblement selon l'axe de travail avec, de part et d'autre de celle-ci, des parties obliques dirigées vers l'avant et vers l'arrière. Les corps de labours sont fixés sur les parties obliques et la partie centrale de la perche est montée à rotation autour d'un axe longitudinal sur un groupe support à une ou deux roues d'un type quelconque connu par l'intermédiaire d'un dispositif de relevage permettant de soulever l'ensemble de la charrue pour son retournement (voir FR-A-2.322.518). Ce type de charrues à huit, dix voir douze paires de socs, se développe commercialement de plus en plus avec les puissances accrues des tracteurs en vue d'assurer un rendement accru de la main d'oeuvre.

Ces charrues présentent toutefois une longueur importante puis-qu'elle atteint 9 mètres pour les charrues à huit corps et 11 mètres pour les charrues à dix corps. Il en résulte que les dénivellations du terrain se traduisent par un différence de terrage des socs puisque, pour une inclinaison de 5° de la perche entre le corps de labour avant et le point milieu au droit du groupe support, le corps de labour arrière présentera, pour une charrue dix corps, une différence de terrage avec le corps avant de 0,087 x 550cm = 48cm, cette différence de terrage étant, avec une huit corps et pour la même inclinaison, de 0,087 x 450cm = 39cm. Ces valeurs sont déjà de 9cm et 16cm pour un angle de seulement 2°. Si en fait le groupe support à roues passe un point haut ou un point bas du terrain ayant une différence de niveau de x centimètres avec la ligne joignant les points à l'appui des corps avant et arrière et si le terrage du corps avant est imposé,par exemple par le tracteur, le terrage du corps de labour arrière sera modifié de 2x centimètres.

En outre la longueur de ces charrues accroît la largeur des guérets en début et en fin de champs puisque les extrémités des sillons sont étagées sur la longueur de la charrue et parce que l'attelage nécessite une surface d'évolution importante pour pouvoir réaligner la charrue.

On connaît par FR-A-2201022 une charrue pour labours en planches, c'est-à-dire non réversible, comportant deux éléments de labour accouplés par une articulation, un vérin hydraulique permettant de soulever l'élément postérieur en position de transport, afin d'éviter un fléchissement des éléments de la charrue vers le bas lors du transport. Cette charrue, qui n'est pas réversible, ne prévoit pas de moyens spécifiques, en particulier lors du retournement des socs, qui évitent les inconvénients précédents.

La présente invention a pour but de remédier à ces inconvénients et concerne à cet effet une charrue multi-socs semi-portée réversible comportant un grand nombre de corps de labour fixés sur une perche, la perche étant constituée par au moins deux éléments réunis deux à deux par une partie centrale constituée de deux éléments avant et arrière articulés entre eux par une articulation autour d'un axe horizontal en position de travail de la charrue, ladite articulation comportant des moyens pour bloquer, lors des manoeuvres et lors du retournement des socs, lesdits éléments avant et arrière en position alignée, et ladite partie centrale étant montée à rotation autour d'un axe longitudinal d'un châssis porté par des roues réglables pour régler le terrage et permettre le retournement.

Selon un mode de réalisation préférentiel, l'articulation est réalisée dans la partie centrale de la perche sensiblement au droit d'un groupe support à roues de cette partie centrale.

Selon une autre caractéristique, des roues de jauge sont prévues à la ou aux extrémités libres de la perche et au voisinage de chaque articulation. Selon un mode de réalisation préférentiel, une roue de jauge est prévue à chacune des extrémités avant et arrière de la perche et ces roues coopérant pour le réglage de terrage avec les roues de jauge constituées par le groupe support à roues de la partie centrale.

Selon une autre caractéristique, les moyens pour bloquer l'articulation sont constitués par une clavette mobile, solidaire de l'un des éléments de perche articulés et libre en coulissement par rapport à celui-ci, s'engageant dans une encoche solidaire de l'autre élément de la perche. Selon un mode de réalisation préférentiel, la clavette est constituée par un élément cylindrique monté coulissant parallèlement à l'axe d'articulation dans une glissière horizontale en faisant saillie de part et d'autre de l'élément de perche et l'encoche est constituée par deux découpes en V en coïncidence réalisées dans deux flasques solidaires de l'autre élément de perche et disposés de part et d'autre du premier élément de perche.

Selon une autre caractéristique, l'ouverture de l'angle entre les deux éléments aboutissant à une même articulation est réglable et contrôlable en l'état déverrouillé de l'articulation notamment par un vérin double effet. Cette caractéristique qui permet de terrer à des moments différents les groupes de socs avant et arrière, permet de réduire la longueur d'un guéret, le labour avec le groupe de corps avant pouvant être effectué, sur la demi-longueur de la charrue, avec le groupe de corps arrière relevé et passant au-dessus d'un semis ou autre sur la parcelle voisine.

Selon une autre caractéristique au moins une articulation verrouillable autour d'un axe vertical est prévue sur la longueur de la perche. Selon un mode de réalisation préférentiel l'orientation relative des deux éléments aboutissant à l'articulation verticale est contrôlable par un vérin double effet. Cette caractéristique est plus particulièrement intéressante en combinaison avec les caractéristiques ci-dessus pour réduire l'encombrement en virage de la charrue et pour maintenir de façon contrôlée, par exemple, le groupe de corps arrière en position de labour alignée pendant que le tracteur amorce le virage en guéret avec le groupe de corps avant relevé.

D'autres caractéristiques de l'invention apparaîtront à la lecture de la description d'un exemple de réalisation faite ci-après avec référence aux dessins ci-annexés dans lesquels:

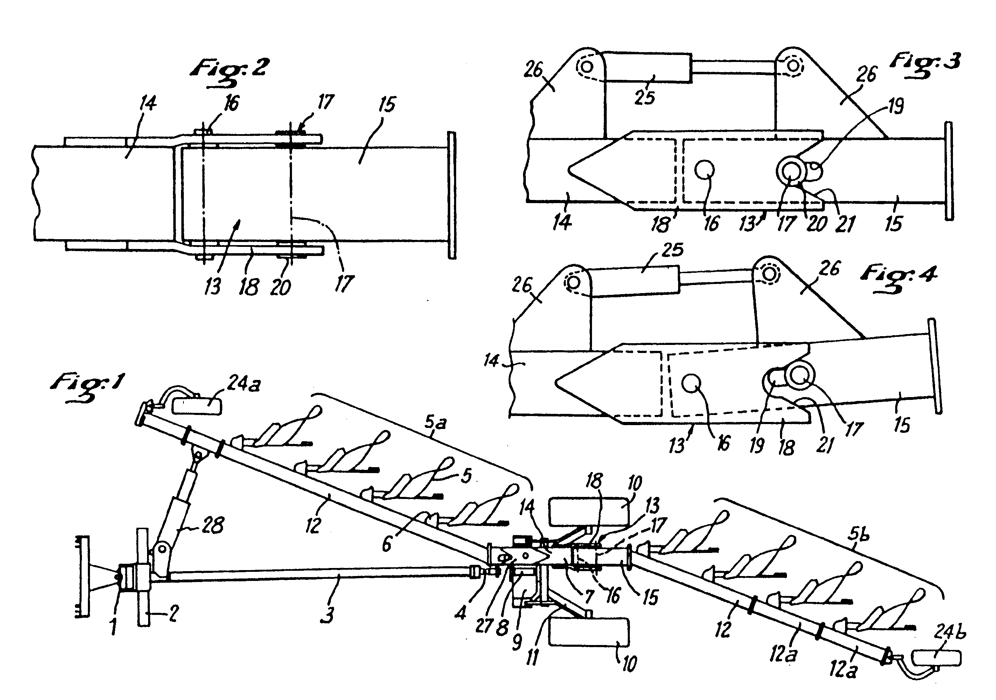

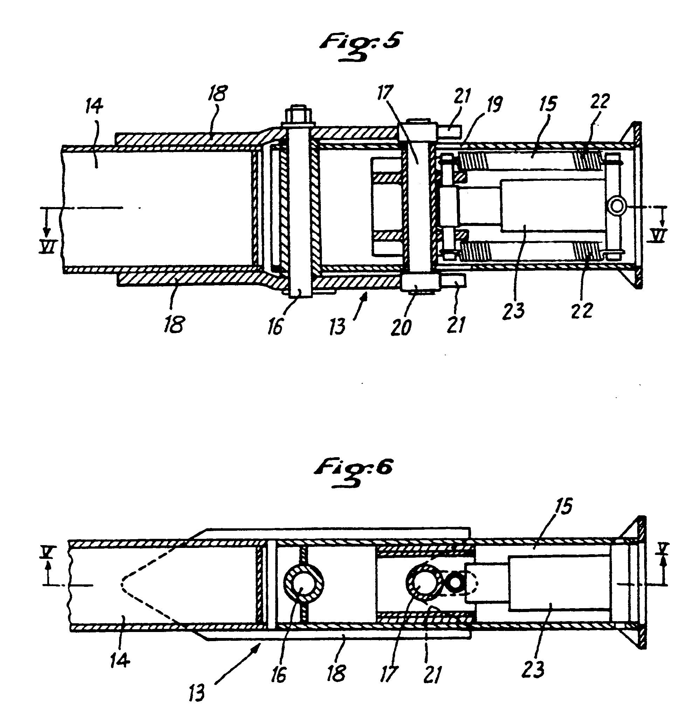

La figure 1 est une vue en plan schématique d'une charrue à huit corps de labour conforme à l'invention; la figure 2 est une vue de détail en plan de l'articulation; la figure 3 est une vue de détail en élévation d'une articulation avec contrôle de l'ouverture de l'angle; la figure 4 est une vue correspondant à figure 3 avec l'articulation déverrouillée; la figure 5 est une vue de détail en coupe par V-V de figure 6 et la figure 6 une vue de détail en coupe par VI-VI de figure 5.

Dans les dessins la référence 1 désigne le point d'attelage sur le tracteur et 2 le dispositif de commande du retournement de la charrue. La référence 3 désigne la fléche de traction qui est solidarisée avec la charrue par une rotule 4.

La référence 5 désigne un corps de labour comportant deux socs avec versoirs symétriques, corps qui sont fixés en 6 par un étançon sur une poutre longitudinale dite "perche". La charrue représentée comporte huit corps de labour répartis en un groupe avant 5a et un groupe arrière 5b, chaque groupe comportant quatre corps.

La perche comporte une partie centrale 7 qui est montée à rotation autour d'un axe longitudinal 8 lui-même porté par une traverse ou châssis 9 porté par deux roues 10 montées à l'extrémité de bras pendulaires 11 dont l'inclinaison peut être réglée par des vérins pour relever ou abaisser le châssis 9 et partant l'ensemble de la charrue pour en régler le terrage ou permettre le retournement. A ses extrémités avant et arrière la partie centrale porte deux éléments de perche obliques 12 l'un avant et l'autre arrière. Ces éléments de perche peuvent, de façon connue, être constitués par des tronçons de poutre 12a réunis par des flasques pour permettre de modifier le nombre de corps de la charrue.

La charrue telle que ci-dessus décrite est classique.

Conformément à l'invention une articulation d'axe horizontal désignée dans son ensemble par la référence 13 est réalisée sur la partie centrale 7 de la perche qui comporte un élément avant 14 et un élément arrière 15 réunis par un axe 16. Pour neutraliser cette articulation et solidariser de façon rigide les éléments 14 et 15 de la partie centrale un bout d'arbre 17 est monté coulissant dans deux lumières 19 réalisées dans les flancs opposés de l'élément 15. Les moyens commandant le coulissement seront décrits plus en détail ci-après. Aux extrémités du bout d'arbre 17 sont montés deux galets 20 qui coopèrent avec une came en V 21 à sommet en arc de cercle réalisée dans les extrémités de deux flasques 18 soudés sur les flancs latéraux de l'élément avant 14 et se prolongeant au-delà de l'axe 16, dont les portées sur l'élément 14 sont réalisées dans lesdits flasques, jusqu'à la lumière 19.

Comme représenté à titre d'exemple illustratif aux figures 5 et 6, la commande de déverrouillage de l'articulation autour de l'axe 16 peut être assurée en soumettant l'axe 17 à la sollicitation de deux ressorts 22 qui tendent à extraire les galets 20 des cames 21 pour laisser l'articulation 13 jouer librement et en poussant en engagement les galets 21 dans le sommet des encoches en V formant les cames 21 avec un vérin hydraulique de poussée 23. En pratique l'articulation n'est bloquée que pendant les périodes de manoeuvre et notamment pendant le retournement, ce pourquoi on a choisi un déverrouillage automatique par les ressorts 22 et un verrouillage qui demande une plus grande force lorsque les éléments doivent être réalignés avant le verrouillage, par la poussée positive d'un vérin. Une disposition inverse ou à double commande positive par vérin pourrait également être adoptée.

En raison de la liberté d'inclinaison ainsi donnée aux éléments 12 de la perche et pour maintenir le terrage des socs de chaque groupe 5a-5b, une roue de terrage avant 24a et arrière 24b sont montées aux extrémités des éléments 5a et 5b.

Selon une autre caractéristique constituant un développement de l'invention, un vérin double effet 25 est monté entre deux éléments en console 26 solidaires des éléments 14 et 15. Dans ce cas les lumières 19 sont de préférence prolongées pour que les galets 20 puissent échapper aux branches de la découpe en V 21, ce qui permet d'accroître l'angle d'inclinaison relative. Ceci permet par exemple de relever les socs du groupe de corps de labour 5b tout en mettant les socs du groupe 5a en position de travail en abaissant la partie centrale 7 et en descendant le point d'attelage 2 sur le tracteur pour amener la roue 24a en appui.

Selon une autre caractéristique constituant un autre développement de l'invention, une articulation d'axe vertical désignée par la référence générale 27 est prévue sur la partie centrale 7 de façon que l'inclinaison entre les deux éléments 12 avant et arrière puisse être modifiée de manière à rapprocher ou écarter les corps de labour de la fléche 3. Ce mouvement peut être commandé à l'aide d'un vérin double effet 28. Cette disposition permet d'éviter un obstacle sans dévier la ligne de labour ou en cas de virage du tracteur de maintenir la ligne de labour des corps du groupe arrière ou de régler celle du groupement en écartant ou rapprochant l'élément de perche avant de la fléche 3, ce qui permet d'exercer un couple de maintien en ligne du groupe de corps intéressé alors que le tracteur n'est pas en ligne. Pour faciliter la manoeuvre le vérin 28 peut être du type oléo pneumatique pour laisser subsister une composante de guidage par la roue de terrage et les socs.

## Revendications

1. Une charrue multi-socs semi-portée réversible comportant un grand nombre de corps de labour fixés sur une perche, la perche étant constituée par au moins deux éléments (12) réunis deux à deux par une partie centrale (7) constituée de deux éléments avant (14) et arrière (15) articulés entre eux par une articulation (13) autour d'un axe (16) horizontal en position de travail de la charrue, ladite articulation (13) comportant des moyens (20, 21) pour bloquer, lors des manoeuvres et lors du retournement des socs, lesdits éléments avant (14) et arrière (15) en position alignée, et ladite partie centrale étant montée à rotation autour d'un axe longitudinal (8) d'un châssis (9) porté par des roues (10) réglables pour régler le terrage et permettre le retournement.

2. Une charrue selon la revendication 1,
caractérisée en ce que des roues de jauge (24) sont prévues à la ou aux extrémités libres de la perche et au voisinage de chaque articulation.

3. Une charrue selon la revendication 2,
caractérisée en ce qu'une roue de jauge (24) est prévue à chacune des extrémités avant et arrière de la perche (12) et ces roues coopérant pour le réglage du terrage avec les roues de jauge constituées par le groupe support à roues (10) de la partie centrale.

4. Une charrue selon l'une quelconque des revendications 1 à 3,
caractérisée en ce que les moyens pour bloquer l'articulation sont constitués par une clavette (17) mobile, solidaire de l'un (15) des éléments de perche articulés et libre en coulissement par rapport à celui-ci, s'engageant dans une encoche (21) solidaire de l'autre élément (14) de la perche.

5. Une charrue selon la revendication 4,
caractérisée en ce que la clavette est constituée par un élément cylindrique (17-20) monté coulissant parallèlement à l'axe d'articulation dans une glissière horizontale (19) en faisant saillie de part et d'autre de l'élément de perche (15) et l'encoche est constituée par deux découpes en V (21) en coïncidence réalisées dans deux flasques (18) solidaires de l'autre élément (14) de perche et disposés de part et d'autre du premier élément de perche (15).

6. Une charrue selon l'une quelconque des revendications 1 à 5,
caractérisée en ce que l'ouverture de l'angle entre les deux éléments (14-15) aboutissant à une même articulation (13) est réglable et contrôlable en l'état déverrouillé de l'articulation (13) notamment par un vérin double effet (25).

7. Une charrue selon l'une quelconque des revendications 1 à 6,
caractérisée en ce qu'au moins une articulation verrouillable (27) autour d'un axe vertical est prévue sur la longueur de la perche.

8. Une charrue selon la revendication 7,
caractérisée en ce que l'orientation relative des deux éléments aboutissant à l'articulation verticale (27) est contrôlable par un vérin double effet (28).

## Claims

1. A reversible multifurrow semi-mounted plough comprising a large number of plough-bodies fixed on a beam, the beam being constituded by at least two elements (12) interconnected two by two via a central portion (7) constituted by two front (14) and rear (15) elements articulated together via an articulation (13) about an axis (16), horizontal in the working position of the plough, said articulation (13) comprising means (20, 21) for locking, during the manoeuvres and turning over the ploughshares, said front (14) and rear (15) elements in an aligned position and said central portion being mounted rotatably about a longitudinal axis (8) of a chassis (9) carried by adjustable wheels (10) to set the ploughing depth and to allow the turning-over.

2. A plough according to claim 1,
characterized in that ploughing depth wheels (24) are provided at the free end or ends of the beam and in the vicinity of each articulation.

3. A plough according to claim 2,
characterized in that a ploughing depth wheel (24) is provided at each of the front and rear ends of the beam (12) and these wheels cooperate for the setting of the ploughing depth with the ploughing depth wheels constituted by the wheeled supporting groups (10) of the central portion.

4. A plough according to any one of claims 1 to 3,
characterized in that the means for locking the articulation are constituted by a mobile pin member (17), integral with one (15) of the articulated beam elements and free to slide with respect to that element, engaging in a notch (21) formed in the other element (14) of the beam.

5. A plough according to claim 4,
characterized in that the pin member is constituted by a cylindrical element (17-20) slidably mounted parallel to the articulation axis in a horizontal slide (19) and protruding on either side of beam element (15), and the notch is constituted by two V-shaped cut-outs (21) in register with each other and formed in two flanges (18) integral with the other beam element (14) and disposed on either side of the first beam element (15).

6. A plough according to any one of claims 1 to 5,
characterized in that the opening of the angle between the two elements (14-15) which end in a same articulation (16) is settable and controllable in the unlocked state of the articulation (13), notably by a double-acting jack (25).

7. A plough according to any one of claims 1 to 6,
characterized in that at least one articulation (27) which is lockable about a vertical axis is provided on the length of the beam.

8. A plough according to claim 7,
characterized in that the relative orientation of the two elements ending in the vertical articulation (27) is controllable by a double-action jack (28).

## Patentansprüche

1. Vielscharaufsatteldrehpflug mit einer großen Anzahl von Pflugkörpern, die an einem Pflugbalken befestigt sind, wobei der Pflugbalken aus mindestens zwei Elementen besteht, die paarweise durch einen Mittelteil (7) verbunden sind, der aus zwei Elementen, einem vorderen (14) und einem hinteren Element (15) besteht, die durch ein Gelenk (13) um eine in Arbeitsstellung des Pflugs horziontale Achse (16) gelenkig miteinander verbunden sind, wobei das besagte Gelenk (13) Mittel (20, 21) umfaßt, um bei den Betätigungen und beim Wenden der Pflugscharen die besagten vorderen (14) und hinteren Elemente (15) in ausgerichteter Stellung zu arretieren, und wobei der besagte Mittelteil drehbar um eine Längsachse (8) eines Rahmens (9) angebracht ist, der von verstellbaren Rädern (10) getragen wird, um die Pflugtiefe einzustellen und das Wenden zu ermöglichen.

2. Pflug nach Anspruch 1, **dadurch gekennzeichnet,** daß die Einstellräder (24) an dem oder den freien Enden des Pflugbalkens und in der Nähe jedes Gelenks vorgesehen sind.

3. Pflug nach Anspruch 2, **dadurch gekennzeichnet**, daß ein Einstellrad (24) an jedem der vorderen und hinteren Enden des Pflugbalkens (12) vorgesehen ist und daß diese Räder zur Einstellung der Pflugtiefe mit den Einstellrädern zusammenwirken, die durch das Rädertragwerk (10) des Mittelteils gebildet werden.

4. Pflug nach einem der Ansprüche 1 bis 3 , **dadurch gekennzeichnet**, daß die Mittel zur Arretierung des Gelenks aus einem beweglichen Keil (17) bestehen, der drehfest mit einem (15) der angelenkten Pflugbalkenelemente verbunden und im Verhältnis zu diesem frei verschiebbar ist, wobei er in eine Nut (21) eingreift, die fest mit dem anderen Element (14) des Pflugbalkens verbunden ist.

5. Pflug nach Anspruch 4, **dadurch gekennzeichnet**, daß der Keil aus einem zylindrischen Element (17-20) besteht, das parallel zur Gelenkachse in einer horizontalen Gleitführung (19) verschiebbar ist, wobei es beiderseits des Pflugbalkenelements (15) vorsteht, und daß die Nut aus zwei deckungsgleichen V-förmigen Einschnitten (21) besteht, die in zwei Flanschen (18) ausgeführt sind, die fest mit dem anderen Element (14) des Pflugbalkens verbunden und beiderseits des ersten Pflugbalkenelements (15) angeordnet sind.

6. Pflug nach einem der Ansprüche 1 bis 5 , **dadurch gekennzeichnet**, daß die Öffnung des Winkels zwischen den beiden Elementen (14-15), die zu ein und demselben Gelenk (13) führen, bei freigegebenem Gelenk (13) verstellbar und steuerbar ist, was insbesondere durch einen doppeltwirkenden Zylinder (25) erfolgt.

7. Pflug nach einem der Ansprüche 1 bis 6 , **dadurch gekennzeichnet,** daß mindestens ein um eine vertikale Achse verriegelbares Gelenk (27) auf der Länge des Pflugbalkens vorgesehen ist.

8. Pflug nach Anspruch 7**, dadurch gekennzeichnet**, daß die relative Ausrichtung der beiden Elemente, die zu dem vertikalen Gelenk (27) führen, durch einen doppeltwirkenden Zylinder (28) steuerbar ist.
